# EUROPÄISCHE PATENTSCHRIFT

(11) **EP 1 031 720 B1**
(45) Veröffentlichungstag und Bekanntmachung des Hinweises auf die Patenterteilung: **12.11.2003**
(21) Anmeldenummer: 00100323.5
(22) Anmeldetag: 07.01.2000
(51) Int. Cl.: F02D 41/12, F02D 17/00, F02D 41/36

(54) **Verfahren zur Zylinderab-und-zuschaltung bei einer Kraftfahrzeug-Brennkraftmaschine**
Method for cylinder cut-off and resumption in an internal combustion engine for vehicle
Méthode pour la coupure et la reprise de cylindres dans un moteur a combustion interne pour vehicule

(30) Priorität: 24.02.1999 DE 19907851
(43) Veröffentlichungstag der Anmeldung: 30.08.2000
(73) Patentinhaber: Bayerische Motoren Werke Aktiengesellschaft, 80809 München (DE)
(72) Erfinder: Lemberger, Heinz, 85774 Unterföhring (DE); Bauer, Josef, 84424 Isen (DE)

(56) Entgegenhaltungen:
- DE-A- 19 619 320
- US-A- 4 227 505
- US-A- 5 769 054

## Beschreibung

Die Erfindung betrifft ein Verfahren zur Zylinderab- und -zuschaltung bei einer Kraftfahrzeug-Brennkraftmaschine gemäß dem Oberbegriff des Anspruchs 1.

Aufgrund immer strengerer Abgasnormen und der Zielsetzung einer Verbrauchssenkung wird immer häufiger auf das Prinzip der Zylinderabschaltung zurückgegriffen.

Generell gibt es zwei verschiedene Arten der Zylinderabschaltung. Zum einen die mechanische oder besser elektro-mechanische Abschaltung, bei der durch Stillegung der Gaswechselventile und dem Abschalten der Einspritzventile eine Zylinderabschaltung erreicht wird. Diese Methode bietet unter dem Gesichtspunkt der Kraftstoffeinsparung das größte Potential. Als Vorteil der elektro-mechanischen Zylinderabschaltung lassen sich geringe Ladungswechselverluste, geringe Reibungsverluste durch teilweises Stillegen des Ventiltriebs, geringe Drosselverluste und eine bessere Befüllung der aktiven Zylinder nennen. Nachteilig hierbei sind die Notwendigkeit einer mechanischen Änderung am Zylinderkopf und am Ventiltrieb, der Einsatz einer zusätzlichen elektronischen Steuerung und die Anfälligkeit von mechanischen Bauteilen sowie die zusätzlichen Kosten und das zusätzliche Gewicht für solche mechanische Bauteile.

Eine kostengünstigere Realisierung der Zylinderabschaltung ergibt sich in einer rein elektronischen Abschaltung, und zwar durch Abschaltung der Einspritzventile. Diese Methodik bringt zwar im Gegensatz zur mechanischen bzw. elektro-mechanischen Abschaltung eine geringere Verbrauchssenkung, ist aber vom Aufwand her wesentlich einfacher, da keine mechanischen Änderungen am Zylinderkopf und am Ventiltrieb vorgenommen werden müssen. Es sind lediglich Modifikationen an einem bereits vorhandenen Steuergerät erforderlich.

Um eine solche rein elektronische Zylinderabschaltung handelt es sich auch vorliegend. Zum weiteren Umfeld der Erfindung wird auf die DE 196 19 320 A1, die DE 44 27 203 C1, die EP 0 647 775 A2 und die DE 33 13 038 C2 hingewiesen.

In der DE 196 19 320 A1 ist eine Vorrichtung zur Abschaltung einer fest vorgegebenen Anzahl von Zylindern durch Stoppen der Kraftstoffzufuhr beschrieben, wobei die Anzahl der abgeschalteten Zylinder verändert werden kann. Zum Einstellen des Fahrkomforts wird der Zündwinkel, der Befüllungsgrad und/oder die Einspritzung verstellt. Eine Entscheidung über die Abschaltung erfolgt durch die Motorlast und die Motordrehzahl.

Bei der DE 44 27 203 C2 wird ebenfalls ein Abschalten einzelner Zylinder durch Stoppen der Kraftstoffzufuhr beschrieben. In Abhängigkeit von einer momentanen Motorlast wird entschieden, ob der in der Zündreihe folgende Zylinder befeuert wird oder nicht. Ziel dieser Methode ist jedoch nicht die Kraftstoffeinsparung, sondern eine damit mögliche Antischlupfregelung.

Die DE 33 13 038 C2 beschreibt ein Abschalten von Zylindergruppen durch Stillegen der Kraftstoffzufuhr und durch Umschalten von einer Zylindergruppe zur anderen Zylindergruppe, um ein Auskühlen der stillgelegten Zylinder im Hinblick auf mögliche Nachteile bei der Schadstoffemission zu vermeiden. Eine Steuerung erfolgt hierbei über Zündwinkel und den Füllungsgrad sowie die Luftmenge. Ferner wird der Umschaltvorgang über eine bestimmte Zahl von Maschinenumdrehungen durchführen, so daß der Fahrer möglichst keinen Umschaltruck bemerkt.

Ein Verfahren der eingangs genannten Art ist aus der EP 0 647 775 A2 bekannt, bei der eine sequentielle Abschaltung der Einspritzung nach einem vorgegebenen Programm zur Steuerung der Kühlmitteltemperatur im Leerlauf beschrieben ist. Eine sequentielle Abschaltung erfolgt nur dann, wenn die Kühlmitteltemperatur größer als 80° C und/oder die Lufttemperatur im Ansaugluftsammler größer als 20° C ist. Die wechselweise Abschaltung wird erst bei etwa 5 km/h aufgehoben und ist nur im Leerlauf wirksam. Mit diesem Verfahren ist es möglich, einem Auskühlen von Zylindern und einer Unterschreitung einer vorgegebenen Grenztemperatur beim Katalysator vorzubeugen.

Die Aufgabe der vorliegenden Erfindung ist es, ein Verfahren der eingangs genannten Art weiterzuentwickeln, bei dem ein Umschaltruck beim Zuschalten von Zylindern vermieden werden kann. Diese Aufgabe wird durch die im Anspruch 1 genannten Merkmale gelöst.

Demgemäß wird bei einem Verfahren der eingangs genannten Art der Motorhochlauf stufenweise nach einem vorgegebenen Programm durchgeführt. Zudem erfolgt ein Bremseingriff von fremdkraftbetätigbaren Bremsen zur Vermeidung des Umschaltruckes.

Zwar bietet die rein elektronische Zylinderabschaltung durch entsprechende Ansteuerung von Einspritzventilen nicht die maximal mögliche Kraftstoffeinsparung, doch kann sie mit einem minimalen technischen Aufwand gelöst werden. Vorteilhaft bei diesem Verfahren sind geringe Drosselverluste, eine bessere Befüllung der aktiven Zylinder und eine kostengünstige Realisierung. Mit dem genannten Verfahren wird ein in sich schlüssiges Gesamtkonzept zur komfortorientierten Zylinderab- und zuschaltung vorgestellt. Insbesondere soll der Fahrer eine Reduzierung der betriebenen Zylinder bzw. die Zuschaltung von abgeschalteten Zylindern möglichst nicht bemerken.

Zusätzliche Maßnahmen zur Vermeidung eines Umschaltruckes können eine Zündwinkelverstellung und eine Drosselklappenverstellung sein, die vorzugsweise durch die Motorsteuerung veranlaßt werden.

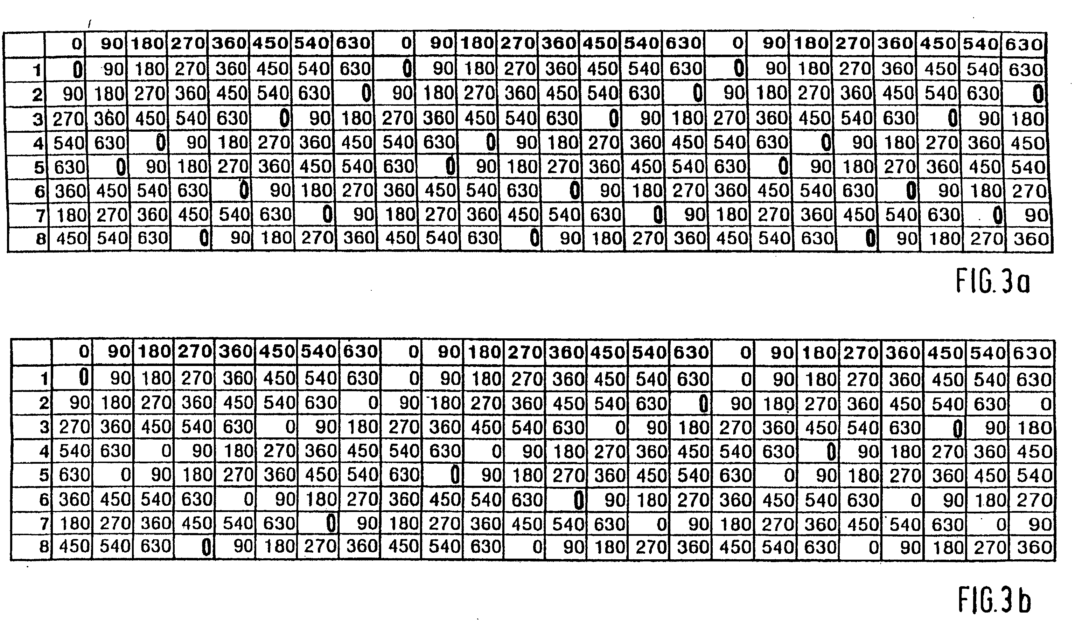

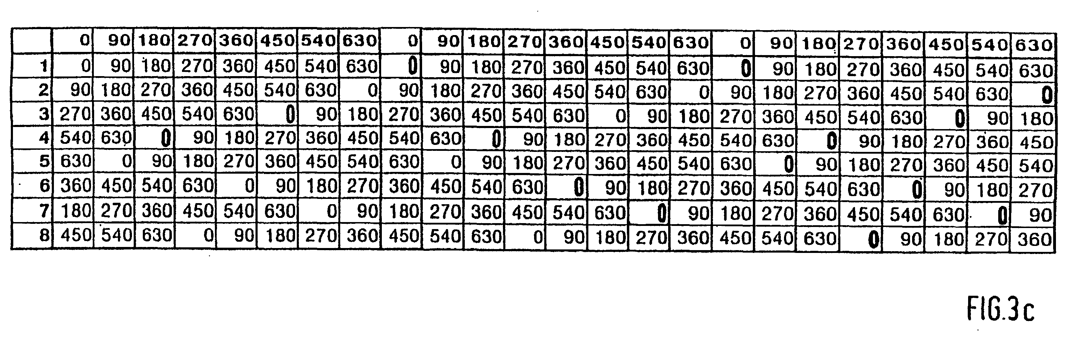

Als geeignete Abschaltung bei Achtzylindermotoren hat sich eine sogenannte 5/8-tel Abschaltung erwiesen, bei der in selektiver Weise 5 von den 8 Zylindern bei zwei Kurbelwellenumdrehungen nicht betrieben werden. Dennoch werden über einen bestimmten Kurbelwellenwinkelbereich alle Zylinder genau einmal gezündet. Genauer gesagt erfolgt also nicht mehr alle 90° Kurbelwellenwinkel eine Zündung, sondern alle 270°. Sowohl der Abstand der Zündung als auch die Befeuerung der zu zündenden Zylindern wird dabei entsprechend geändert (vgl. Fig. 3b). In Fig. 3a ist eine normale Befeuerung der Zylinder beim Betrieb aller Zylinder in einem 8-Zylinder Motor dargestellt.

Bei einem Motor mit einer anderen Zylinderzahl kann natürlich eine andere Zahl von Zylindern pro zwei Kurbelwellenumdrehungen stillgelegt werden.

Bei einer einfachen Ausführungsform der Erfindung erfolgt eine Zylinderabschaltung nur bei stehenden, sich im Leerlauf befindlichen Fahrzeug. Zwar läßt sich dadurch nicht eine optimale Kraftstoffeinsparung realisieren. Doch sind die Probleme eines Momentenruckes geringer.

In einer weiteren bevorzugten Ausführungsform erfolgt eine Zylinderabschaltung nur, wenn eine vorgegebene Kühlmitteltemperaturschwelle überschritten ist. Überdies kann in einem vorgegebenen Programm festgehalten werden, daß alle Zylinder eines Motors zumindest ab einer vorgegebenen Fahrzeuggeschwindigkeitsgrenze wieder betrieben werden.

Eine konkrete Ausführungsform der Erfindung wird nachfolgend und mit Bezug auf die beiliegenden Zeichnungen näher erläutert. Die Zeichnungen zeigen in
- Fig.1: ein Blockdiagramm, welches die Voraussetzungen für den Abschaltvorgang darstellt,
- Fig.2: ein Blockdiagramm, welches die Voraussetzung für einen Zuschaltvorgang von Zylindern darstellt,
- Fig. 3a: eine Tabelle mit einer Zündfolge bei einem 8-Zylinder Motor mit vollem Zylinderbetrieb,
- Fig. 3b: eine Tabelle, die die Zündabfolge bei einem 8-Zylinder Motor mit 5/8-tel Abschaltung zeigt und
- Fig. 3c: eine Tabelle, die die Zündfolge bei einem Übergang von einer 5/8-tel Abschaltung zu einem Vollbetrieb der Zylinder über zwei Umdrehungen zeigt.

Grundgedanke der vorliegenden Erfindung ist die Vermeidung eines Umschaltrukkes für den Fall, daß abgeschaltete Zylinder wieder zugeschaltet werden. Im vorliegenden Fall handelt es sich um einen 8-Zylinder Motor (nicht dargestellt) mit Direkteinspritzventilen, die von einer digitalen Motorelektronik gesteuert werden. Dabei erfolgt die Zylinderabschaltung bei dieser einfachen Ausführungsform lediglich im Leerlauf, da dann der Aufwand für eine Vermeidung eines Umschaltrucks zunächt am besten in den Griff zu bekommen ist.

Bei einem normalen Vollbetrieb (Betrieb aller acht Zylinder) liegt eine Zündfolge vor, wie sie in Fig. 3a (vgl. fettgedruckte Zahlen 0) dargestellt ist, d.h. es wird alle 90° Kurbelwellenwinkel ein Zylinder mit der Zündabfolge 1-5-4-8-6-3-7-2 gezündet. Damit wird alle 720° - dies entspricht 2 Umdrehungen der Kurbelwelle ) jeder Zylinder einmal gezündet.

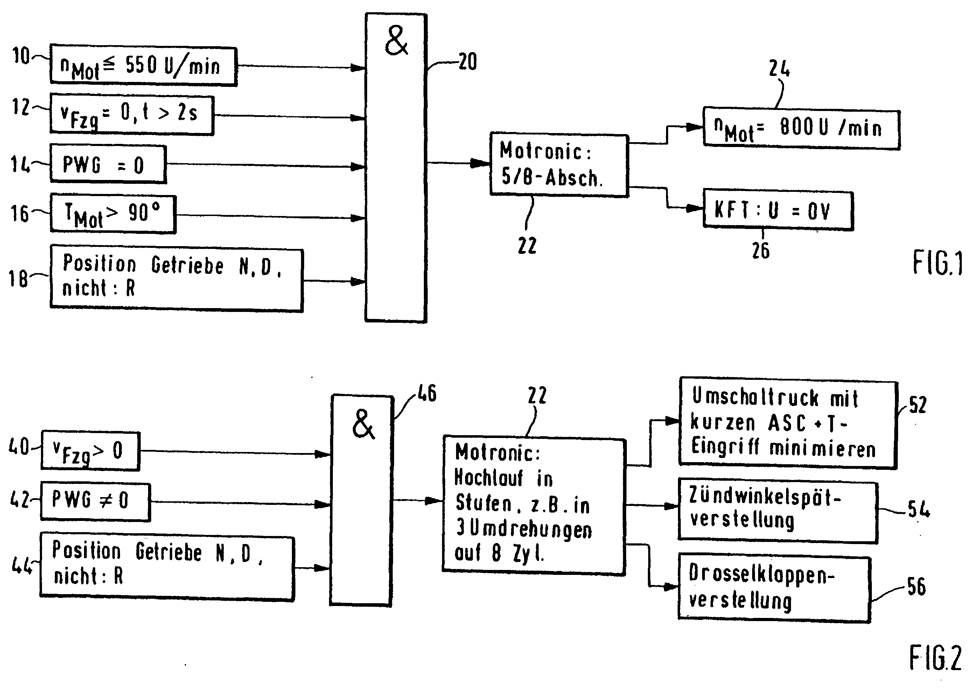

Wird nun gemäß Fig. 1 festgestellt, daß die Leerlaufdrehzahl des Motors n_{Mot} kleiner als oder gleich 550 Umdrehungen pro Minute ist (Bezugsziffer 10), die Fahrzeuggeschwindigkeit v_{Fzg} gleich Null ist (Bezugsziffer 12), und zwar über einen Zeitraum von mehr als 2 Sekunden, die Fahrzeugbremse betätigt ist (PWG = 0) (Bezugsziffer 12), die Motortemperatur T_{Mot} größer als 90° ist (Bezugszeichen 16) und das automatische Getriebe in einer Getriebestellung Neutral (N) oder Normaler Fahrbetrieb (D) ist, so gibt ein logisches UND-Gatter 20, in das diese Informationen eingespeist werden, eine entsprechende Information an eine Motorsteuerung (Motronic - Bezugszeichen 22) ab. Bezüglich der Stellung des Gangwahlhebels wird darauf hingewiesen, daß dieser sich nicht in der Rückfahrposition (R) befinden darf.

Erhält die Motorsteuerung 22 von dem UND-Gatter 20 ein entsprechendes Signal, leitet sie eine 5/8-tel Abschaltung der Zylinder ein, so daß die Einspritzventile und die Zündung derart betätigt wird, daß eine Zündabfolge, wie sie in Fig. 3b (vgl. fettgedruckte Zahlen 0) dargestellt ist, erfolgt. Bei dieser sog. 5/8-tel Abschaltung erfolgt alle 270° Kurbelwellenumdrehung die Zündung eines Zylinders, und zwar in der Zündabfolge 1-8-7-5-6-2-4-3, so daß über 2160°, dies entspricht 6 Vollumdrehungen der Kurbelwelle, alle Zylinder einmal gezündet werden. Mit der 5/8-tel Abschaltung wird ein Auskühlen der einzelnen Zylinder vermieden, was sich vorteilhaft auf das Emissionsverhalten eines solchermaßen betriebenen Motors auswirkt.

Gemäß Fig. 1 wird nach der 5/8-tel Abschaltung die Leerlaufdrehzahl des Motors n_{Mot} auf 800 Umdrehungen pro Minute hochgesetzt (Bezugsziffer 24). Überdies wird die Spannung eines elektrisch beheizbaren Thermostaten (KFT = Kennfeldthermostat) auf 0 Volt gesetzt. Damit wird ein Auskühlen des Motors durch die reduzierte Anzahl der befeuerten Zylinder verhindert. Durch die Anhebung des Leerlaufs wird weiterhin ein sauberer Rundlauf des Motors, insbesondere bei belasteten Nebenaggregaten, gewährleistet. Sämtliche vorgenannten Parameter können einzeln oder in Kombination als Kennfeld abgelegt sein.

Bei der vorgenannten Zylinderabschaltung muß berücksichtigt werden, daß die stillgelegten Zylinder mit Frischluft gespült werden, was die Gemischbildung beeinflußt (λ >> 1). Die Kraftstoffeinspritzung kann während der Abschaltung zwar aus einem Kennfeld heraus gesteuert werden. In diesem Kennfeld müssen jedoch verschiedene Motordaten wie die Ansaugluftmenge, die Ansauglufttemperatur, die Drehzahl und die Motortemperatur abgelegt sein, um eine entsprechende Gemischaufbereitung zu gewährleisten. Bei der Abgasnachbehandlung sinkt die Umwandlungsrate des Drei-Wege-Katalysators infolge des Luftüberschusses im Abgas, so daß nur noch ein Teil der Stickoxide konvertiert werden können. Bezüglich der Lösung dieses Problems muß beispielsweise auf eine DeNOx-Katalysatoranlage zurückgegriffen werden.

Die Zuschaltung von abgeschalteten Zylindern ist in besonderer Weise kritisch. Der dadurch entstehende Leistungssprung soll für den Fahrer möglichst angenehm sein und darf aus Sicherheitsgründen nicht abrupt erfolgen.

Vorliegend erfolgt die Zuschaltung der Zylinder bei einer Fahrzeuggeschwindigkeit V_{Fzg}, die größer Null ist (Bezugsziffer 40), und den Bedingungen Fahrzeugbremse nicht betätigt (PWG ungleich Null) (Bezugsziffer 42) und Wählhebelstellung des Getriebes bei Neutral (N) oder in der Fahrstellung (D).

Die vorgenannten, von Sensoren gelieferten Signale werden von dem UND-Gatter 20 verarbeitet. Das UND-Gatter 20 gibt bei Vorliegen aller vorgenannten Bedingungen ein Signal an die Motorsteuerung 22 ab, welche nach einem vorbestimmten Programm einen Hochlauf (z. B. innerhalb von drei Umdrehungen) veranlaßt. Ein Hochlauf in zwei Umdrehungen ist in Fig. 3c zu erkennen, innerhalb der ersten 720° wirkt noch die 5/8-tel Abschaltung. Innerhalb der nächsten 720° der Fig. 3c Kurbelwellenumdrehung erfolgt ein stufenloses Hochlaufen mit der Zündfolge 1-4-6-7 mit einem Zündwinkelunterschied von jeweils 180°. Die letzten 720° Kurbelwinkel in Fig. 3c zeigen dann wieder einen normalen 8-Zylinder-Betrieb. Die jeweiligen Zündungen sind dabei durch fettgedruckte Nullen gekennzeichnet.

Gleichzeitig mit dem Zuschalten der Zylinder wird ein Eingriff der fremdkraftbetätigten Bremsen zur Kompensation des durch die Zuschaltung erzeugten Umschaltrukkes derart veranlaßt, daß die durch die Zylinderzuschaltung verursachte Leistungszunahme gerade kompensiert wird. Dabei gibt die Motoric eine der Zylinderzuschaltung entsprechende Information an die Bremssteuerung und im vorliegenden Fall an die Steuerung für den "ASC +T" Eingriff (Antriebsschlupfkontrolle) ab. Auf den fremdkraftbetätigten Bremseingriff bzw. den Antriebsschlupfantrieb wird vorliegend nicht näher eingegangen, da er im Stand der Technik ausreichend bekannt ist.

Zusätzlich erfolgt eine Zündwinkelspätverstellung zur weiteren Abminderung der Schaltruckes durch den mit der Zuschaltung der Zylinder erzeugten Leistungssprung (Bezugszeichen 54). Schließlich wird von der Motorsteuerung 22 auch noch die Drosselklappenverstellung gemäß Bezugsziffer 56 durchgeführt. Natürlich müssen alle Maßnahmen zur Verminderung des Umschaltruckes aufeinander abgestimmt sein. Vorzugsweise werden die Daten zur Steuerung des Bremseingriffes, der Zündwinkelverstellung und der Drosselklappenverstellung einem Kennfeld entnommen, das die entsprechenden Informationen in Abhängigkeit von Fahrzeugbetriebsbedingungen wie Motordrehzahl, Fahrzeuggeschwindigkeit etc. beinhaltet.

Alle von der Motorsteuerung 22 veranlaßten Maßnahmen tragen dazu bei, daß ein Schaltruck beim Anfahren aus dem Leerlauf möglichst vollkommen vermieden wird. Der Fahrer spürt damit von einer Umschaltung eines teilweise betriebenen Motors in einen vollständig betriebenen Motor nichts.

Natürlich ist es auch möglich, ein Verfahren anzugeben, bei dem die Umschaltung bei Teillast durchgeführt wird. In jedem Fall muß auch - wie beim vorliegenden Verfahren - bei einer Zuschaltung der Zylinder auf eine Kompensation des Leistungssprunges geachtet werden.

## Patentansprüche

1. Verfahren zur Zylinderab- und -zuschaltung bei einer Kraftfahrzeug-Brennkraftmaschine, bei der Einspritzventile von einer Motorsteuerung in Abhängigkeit von Fahrzeugbetriebsbedingungen angesteuert werden, wobei die Abschaltung von Zylindern nach einem vorgegebenen Programm sequentiell durchgeführt wird, und bei der Fahrzeugbremsen fremdkraftbetätigt beaufschlagt werden können,
**dadurch gekennzeichnet,**
**daß** bei der Zuschaltung von Zylindern
- der Motorhochlauf stufenweise nach einem weiteren vorgegebenen Programm erfolgt und
- ein Bremseingriff zur Vermeidung eines Umschaltruckes durchgeführt wird.

2. Verfahren nach Anspruch 1,
**dadurch gekennzeichnet,**
**daß** zur Vermeidung eines Umschaltruckes zusätzlich eine Zündwinkelverstellung erfolgt.

3. Verfahren nach Anspruch 1 oder 2,
**dadurch gekennzeichnet,**
**daß** zur Vermeidung eines Umschaltruckes zusätzlich eine Drosselklappenverstellung erfolgt.

4. Verfahren nach einem der vorhergehenden Ansprüche,
**dadurch gekennzeichnet,**
**daß** die Zylinder derart abgeschaltet werden, daß über einen vorgegebenen Winkelbetrag der Kurbelwelle alle Zylinder genau einmal befeuert werden.

5. Verfahren nach einem der vorhergehenden Ansprüche,
**dadurch gekennzeichnet,**
**daß** eine Zylinderabschaltung lediglich bei stehendem, sich in Leerlauf befindlichem Fahrzeug erfolgt.

6. Verfahren nach einem der vorhergehenden Ansprüche,
**dadurch gekennzeichnet,**
**daß** eine Zylinderabschaltung nur über einer bestimmten, vorgegebenen Kühlmitteltemperaturschwelle durchgeführt wird.

7. Verfahren nach einem der vorhergehenden Ansprüche,
**dadurch gekennzeichnet,**
**daß** über einer vorgegebenen Fahrgeschwindigkeitsgrenze der Motor des Fahrzeugs mit allen Zylindern betrieben wird.

## Claims

1. A method for the switching off and switching on of cylinders in a motor vehicle internal combustion engine, in which injection valves are controlled dependent upon the vehicle operating conditions by the motor control unit, in which the switching off of cylinders is performed sequentially in accordance with a predetermined program, and in which the vehicle brakes can be impacted under servo control,
**characterised in that**,
in the switching on of cylinders
- the run up of the motor occurs in steps in accordance with a further predetermined program and
- a brake intervention is performed to avoid the jolt on changeover.

2. A method according to Claim 1,
**characterised in that**
for the avoidance of changeover jolt an ignition angle adjustment additionally occurs.

3. A method according to claim 1 or claim 2,
**characterised in that**
for the avoidance of changeover jolt a throttle flap adjustment additionally occurs.

4. A method according to any preceding claim,
**characterised in that**
the cylinders are switched off in such a manner that over a predetermined angular movement of the crankshaft all the cylinders are fired exactly once.

5. A method according to any preceding claim,
**characterised in that**
a cylinder disconnection only occurs in the idling condition in a stationery vehicle.

6. A method according to any preceding claim,
**characterised in that**
a cylinder disconnection is performed only above a determined pre set cooling medium temperature threshold.

7. A method according to any preceding claim,
**characterised in that**
above a predetermined vehicle speed threshold the motor is driven with all cylinders.

## Revendications

1. Méthode pour la coupure et la reprise de cylindres dans un moteur à combustion interne d'un véhicule, dont les soupapes d'injection sont excitées en fonction des conditions de marche du véhicule, la coupure de cylindres pouvant s'effectuer de manière séquentielle selon un programme prédéterminé, et selon laquelle des freins du véhicule peuvent être actionnés par une force extérieure,
**caractérisée en ce que**
lors de la reprise de cylindres
- l'accélération du moteur s'effectue par étapes selon un programme prédéterminé supplémentaire, et
- une intervention de freinage s'effectue afin d'éviter une secousse de commutation.

2. Méthode selon la revendication 1,
**caractérisée en ce qu'**
afin d'éviter une secousse de commutation, s'effectue en outre un réglage d'angle de came.

3. Méthode selon la revendication 1 ou 2,
**caractérisée en ce qu'**
afin d'éviter une secousse de commutation, s'effectue en outre un réglage de clapet d'étranglement.

4. Méthode selon l'une des revendications précédentes,
**caractérisée en ce que**
les cylindres sont coupés de telle manière que, pour un angle de vilebrequin prédéterminé, tous les cylindres sont amorcés exactement une fois.

5. Méthode selon l'une des revendications précédentes,
**caractérisée en ce qu'**
une coupure de cylindres ne s'effectue que dans le cas d'un véhicule stationnaire se trouvant en état de marche à vide.

6. Méthode selon l'une des revendications précédentes,
**caractérisée en ce qu'**
une coupure de cylindres ne s'effectue qu'au-dessus d'un certain seuil prédéterminé de température de réfrigérant.

7. Méthode selon l'une des revendications précédentes,
**caractérisée en ce qu'**
au-dessus d'une limite prédéterminée de vitesse de marche, le moteur du véhicule fonctionne avec tous les cylindres.
